# EUROPÄISCHE PATENTSCHRIFT

(11) **EP 2 638 373 B1**
(45) Veröffentlichungstag und Bekanntmachung des Hinweises auf die Patenterteilung: **12.12.2018**
(21) Anmeldenummer: 11763890.8
(22) Anmeldetag: 16.09.2011
(51) Int. Cl.: G01L 3/10

(54) **SENSORANORDNUNG ZUM ERFASSEN EINES DREHMOMENTS**
SENSOR ARRANGEMENT FOR CAPTURING A TORQUE
AGENCEMENT DE CAPTEURS POUR DÉTECTER UN COUPLE

(30) Priorität: 08.11.2010 DE 102010043559
(43) Veröffentlichungstag der Anmeldung: 18.09.2013
(73) Patentinhaber: Robert Bosch GmbH, 70442 Stuttgart (DE)
(72) Erfinder: LUDWIG, Ronny, 72768 Reutlingen (DE)
(86) Internationale Anmeldenummer: PCT/EP2011/066130
(87) Internationale Veröffentlichungsnummer: WO 2012/062502

(56) Entgegenhaltungen:
- EP-A1- 1 424 544
- EP-A1- 1 464 935
- EP-A2- 1 816 457
- DE-A1- 4 231 646
- DE-A1-102004 023 801
- DE-A1-102005 011 196
- FR-A1- 2 689 633
- GB-A- 2 050 623

## Beschreibung

Die Erfindung betrifft eine Sensoranordnung sowie ein Verfahren zum Erfassen eines Drehmoments.

### Stand der Technik

Die Erfindung umfasst eine nach einem magnetischen Messprinzip funktionierende Sensoranordnung zum Erfassen eines Drehmoments. Im Bereich der Drehmoment- und Drehwinkelsensoren kommen heutzutage häufig magnetische Messprinzipien zum Einsatz. Bei diesen wird ein sich bei einer Drehbewegung änderndes magnetisches Feld üblicherweise mit Hall-Sensoren erkannt. Weiterhin wird ein resultierendes Signal in ein Drehwinkel- oder Drehmomentsignal umgerechnet.

Die Druckschrift DE 10 2005 031 086 A1 beschreibt eine Sensoranordnung zur Erfassung eines Differenzwinkels. Bei dieser Druckschrift wird vorgeschlagen, dass mit mindestens einem magnetfeldempfindlichen Sensorelement Magnetfeldinformationen eines Magnetkreises, der ein Magnetpolrad und einen ferromagnetischen Fluxring mit Zähnen aufweist, ausgewertet werden. Die Zähne verlaufen zum radialen Abgriff der Magnetfeldinformation des Magnetpolrads in radialer Richtung.

Ein magnetischer Drehmomentmesser ist in der Druckschrift FR 2 689 633 A1 beschrieben. Dieser Drehmomentsensor weist eine magnetische Anordnung auf, die an zwei Wellen, die über einen Torsionsstab miteinander verbunden sind, angeordnet ist. Dabei umfasst diese magnetische Anordnung eine Spule, die von mehreren magnetflussleitenden Elementen umgeben ist.

Die Druckschrift EP 1 464 935 A1 beschreibt eine Vorrichtung zum Bestimmen eines auf eine Welle ausgeübten Drehmoments. Dabei umschließt diese Vorrichtung zwei zueinander koaxial angeordnete Wellen. Weiterhin umfasst diese Vorrichtung einen Sensorhalter und einen Statorhalter. Dabei ist dieser Sensorhalter über ein Gleitlager an dem Statorhalter abgestützt.

In der Druckschrift DE 10 2004 023 801 A1 ist eine Vorrichtung zum Bestimmen eines Lenkwinkels beschrieben. Als Teil dieser Vorrichtung ist ein Gleitring vorgesehen, der Statorelemente umhüllt, die an einer ersten und einer zweiten Welle angeordnet sind.

In den Druckschriften DE 10 2005 011 196 A1, GB 2 050 623 A, EP 1 424 544 A1, EP 1 816 457 A2 und DE 42 31 646 A1 sind ebenfalls Vorrichtungen zum Bestimmen eines Drehmoments beschrieben.

Bei bekannten Sensoranordnungen werden die Magneteinheiten und der Träger von magnetflussleitenden Ringen auf zwei Wellen montiert, die über einen Drehstab miteinander verbunden sind. Die Sensoreinheit wird über einen Stecker bzw. eine umlaufende Steckerabdichtung an einem umgebenden Gehäuse befestigt. Dadurch ist die Sensoranordnung jedoch mechanisch überbestimmt. Weiterhin ergibt sich eine sehr große Toleranzkette zwischen dem umgebenden

Gehäuse mit der montierten Sensoreinheit und dem Träger von magnetflussleitenden Ringen auf der Welle, da ein großer Luftspalt zwischen Hall-Schaltkreisen und den aus Metall bestehenden magnetflussleitenden Ringen vorhanden ist. Dies erfordert wiederum ein starkes Magnetfeld, weshalb eine deutliche Verkleinerung der Toleranzkette angestrebt wird.

### Offenbarung der Erfindung

Vor diesem Hintergrund werden eine Sensoranordnung und ein Verfahren nach den unabhängigen Patentansprüchen vorgestellt. Weitere Ausführungsformen der Erfindung ergeben sich aus den abhängigen Patentansprüchen und der Beschreibung.

Die Sensoranordnung ist in Ausgestaltung als ein nach magnetischem Prinzip messender Drehmomentsensor für eine Welle ausgebildet, bei dem eine Sensoreinheit (Sensor Unit, SU) zwischen den magnetflussleitenden Ringen einer Magnetflusseinheit (Flux-Tube-Unit, FTU) selbstführend, üblicherweise direkt zu und/oder zwischen den magnetflussleitenden Ringen gelagert und axial arretiert ist. Weiterhin kann die Sensoreinheit als frei fallendes Spritzgussteil konstruiert sein. Üblicherweise fällt ein derartiges frei fallendes Spritzgussteil nach Durchführung eines Spritzgussverfahrens durch eine Spritzgussmaschine selbsttätig aus einer Spritzgussform und muss nicht aus der Spritzgussform entfernt werden.

In einer möglichen Ausführungsform der Sensoranordnung umfasst die Sensoreinheit drei im Abstand von 120° angeordnete, sogenannte Gleitschuhe als Gleitelemente, die zwischen den magnetflussleitenden Ringen angeordnet sind. Eine gleitende Lagerung und/oder Zentrierung der Sensoreinheit erfolgt zumindest partiell durch die drei Gleitschuhe, in der Regel nur an einem magnetflussleitenden Ring, bspw. dem inneren Ring, der Magnetflusseinheit, um eine mechanische Überbestimmung bzw. ein Klemmen der Sensoreinheit bei unrunden magnetflussleitenden Ringen zu vermeiden. Die Gleitschuhe der üblicherweise aus Kunststoff gebildeten Sensoreinheit gleiten hier auf dem Metall der magnetflussleitenden Ringe, die an einem ring- oder hülsenförmigen Trageelement als eine Komponente der Magnetflusseinheit aus Kunststoff befestigt sind. Axial wird die Sensoreinheit üblicherweise zwischen einer Stirnseite des inneren magnetflussleitenden Rings und einem Arretierungsring gleitend geführt. Auch hier gleitet die Sensoreinheit aus Kunststoff auf bzw. gegen Metall. Eine Nut im Arretierungsring wird für eine Index-Funktion zur Umlauf-Zählung verwendet.

In einer weiteren Ausführungsform der Sensoranordnung sind im Gegensatz zur ersten Ausführungsform die magnetflussleitenden Ringe vollständig mit Kunststoff umspritzt und demnach in das Trageelement und/oder einem U-förmigen Doppelring des Trageelements eingebettet, so dass die Sensoreinheit aus Kunststoff auch wiederum auf Kunststoff gleitend gelagert wird. Durch geeignete Auswahl der Kunststoffe für die Sensoreinheit und die Magnetflusseinheit wird eine optimale Gleitfunktion zwischen mindestens einem Gleitelement, üblicherweise einer Anzahl Gleitschuhe, der Sensoreinheit und der Magnetflusseinheit ermöglicht. Der Arretierungsring für die axiale Lagerung ist ebenfalls aus Kunststoff und umfasst ein eingespritztes Metallplättchen für die Index-Funktion zur Umlauf-Zählung.

In einer weiterhin vorgesehenen Ausführungsform ist das Lagerprinzip umgekehrt, d. h. die Gleitfunktion der Sensoreinheit wird durch eine um wenigstens 270° umlaufende Gleitschiene als Gleitelement an der Sensoreinheit zu Lagerzapfen oder Gleitzapfen der Magnetflusseinheit realisiert. Somit erfolgt eine punktuelle Lagerung von Kunststoff zu Kunststoff in radialer und axialer Richtung zwischen der Sensoreinheit, üblicherweise zwischen mindestens einem Lagerelement der Sensoreinheit, und der Magnetflusseinheit mit geringst möglichem Reibwert. Daraus ergibt sich u. a., dass eine Unrundheit mindestens eines der magnetflussleitenden Ringe auf die Lagerfunktion üblicherweise keinen Einfluss hat.

Eine Leiterplatte als weitere Komponente der Sensoranordnung ist an der Sensoreinheit befestigt und kann als Standard-Komponenten bspw. Chipwiderstände, Chipkondensatoren, Hall-ASICs in SMD-Bauform (surface mouted device, oberflächenmontierbares Bauelement), z. B. als TSSSOP oder SOT23 der Robert Bosch GmbH usw. umfassen und mittels SMT (Surface Mount Technology, Oberflächenmontage) bestückt und im Wiederaufschmelzlöten bzw. Reflow-Verfahren gelötet werden. Selektive Lötprozesse sind somit nicht notwendig. Die Leiterplatte wird in axialer Richtung fest an der Sensoreinheit montiert. Die für die Drehmomentmessung erforderlich Hall-ASICs bzw. Hall-Schaltkreise befinden sich dabei auf einem als Finger bezeichneten Abschnitt der Leiterplatte, der zwischen den beiden Ringen der Magnetflusseinheit angeordnet ist.

Zur Realisierung einer optionalen Lenkwinkelfunktion kann an der Sensoreinheit ein Kegelzahnrad befestigt sein, das in eine Kegelverzahnung an der Magnetflusseinheit greift. Hierbei ist die Kegelverzahnung üblicherweise in dem ring- oder hülsenförmigen Lagerelement integriert. Dies ist durch die direkte Lagerung zwischen der Sensoreinheit, üblicherweise dem mindestens einem Lagerelement der Sensoreinheit, und der Magnetflusseinheit möglich. Hierbei kann der Permanentmagnet auf der Leiterplatte montiert sein. Alternativ kann im oder am Kegelzahnrad ein NiFe-Metallplättchen angeordnet sein, das bei Rotation der Welle den Magnetfluss ändert.

Mit der Erfindung ist u. a. eine Direktlagerung und/oder Gleitlagerung zwischen der Sensoreinheit, üblicherweise dem mindestens einen Gleitelement, und den magnetflussleitenden Ringen der Magnetflusseinheit vorgesehen. Die Leiterplatte ist in axialer Richtung zwischen den Ringen angeordnet. Hierbei werden Bauelemente, die mittels Standard-Oberflächenmontage bestückt und im Reflow-Verfahren gelötet werden können, verwendet. Optional kann die Integration eines Lenkwinkelsignals (LWS) vorgesehen sein.

Bei einer möglichen Realisierung ergibt sich eine kurze Toleranzkette zwischen der Sensoreinheit, der die Leiterplatte mit den Hall-Schaltkreisen als magnetfeldsensitiven Sensoren zugeordnet ist, und den Ringen, da diese direkt nebeneinander angeordnet und somit zueinander toleriert sind. Ein Layout der Leiterplatte wird mit der Standard-Oberflächenmontage gestaltet, somit sind keine bedrahteten Bauelemente (THT) notwendig, wodurch Kosten gespart werden.

In der Regel ist nur eine standardisierte Sensoreinheit für alle möglichen Durchmesser von Wellen erforderlich. Außerdem ist eine einfache Integration einer Index-Funktion zur Umlauf-Zählung der Welle durch eine Modifikation des Arretierungsrings möglich. Eine Montage des Permanentmagneten für die Funktion kann auf der Leiterplatte erfolgen. Dies ist kostengünstiger als die Montage des Permanentmagneten am Arretierungsring. Es kann auch eine relativ einfache Aufbau- und Verbindungstechnik zur Bereitstellung der Sensoranordnung vorgesehen sein.

Durch die direkte Lagerung der Sensoreinheit in und/oder auf den magnetflussleitenden Ringen der Magnetflusseinheit sowohl in radialer als auch in axialer Richtung kann eine Reduktion eines Luftspalts zwischen den messenden Hall-Schaltkreisen und den Ringen der Magnetflusseinheit erreicht werden. Auf aufwendige Selektiv-Lötprozessen, z. B. Schöpflöten, Wellenlöten usw., auf der Leiterplatte kann verzichtet werden.

Üblicherweise ist die erste Welle, für die ein auf die erste Welle wirkendes Drehmoment zu ermitteln ist, über einen Torsionsstab mit einer weiteren, zweiten Welle verbunden. Beide genannten Wellen können sich um eine gemeinsame Drehachse koaxial zueinander drehen, wobei der Torsionsstab verdrillt oder tordiert und somit ein Drehmoment zwischen den beiden Wellen erzeugt wird. Die genannten Komponenten der Sensoranordnung, d. h. die Sensoreinheit, die Magnetflusseinheit mit den magnetflussleitenden Ringen sowie der Arretierungsring sind einer der beiden Wellen zugeordnet. Dies bedeutet in einer Ausführungsform der Erfindung, dass die Magnetflusseinheit an der ersten Welle befestigt ist. Dabei umschließt das ring- oder hülsenförmige Trageelement die Welle koaxial. Die beiden magnetflussleitenden Ringe sind ebenfalls koaxial zu der Welle angeordnet und über das Trageelement mit dieser ersten Welle befestigt, wobei mindestens einer der magnetflussleitenden Ringe von dem üblicherweise aus Kunststoff gebildeten Trageelement zumindest teilweise umschlossen und somit zumindest teilweise mit Kunststoff umspritzt ist. Der Arretierungsring ist in Ausgestaltung ebenfalls an der ersten Welle befestigt und zu dieser ersten Welle koaxial angeordnet. Demnach werden bei einer Drehung der ersten Welle Komponenten der Magnetflusseinheit sowie Komponenten des Arretierungsrings ebenfalls mit der ersten Welle gedreht.

Die Sensoreinheit ist ortsfest und/oder an einem Bauteil befestigt, zu dem sich die erste Welle und somit auch die Komponenten der Magnetflusseinheit sowie des Arretierungsrings drehen können. Dabei umfasst die Sensoreinheit eine Hülse, die auch als Ring bezeichnet werden kann und die erste Welle koaxial umschließt. An der Hülse umlaufend ist mindestens ein Gleitelement befestigt, wobei dieses mindestens eine Gleitelement und die Hülse einstückig ausgebildet sind. Falls die Sensoreinheit n Gleitschuhe als Gleitelemente aufweist, können diese an der Hülse unter Winkeln von 360°/n zueinander rotationssymmetrisch angeordnet sein. Falls das mindestens eine Gleitelement als eine Umlaufschiene ausgebildet ist, kann diese einen geeignet zu wählenden Winkelbereich umspannen. Es sind jedoch auch Kombinationen von Gleitschuhen und/oder Umlaufschienen, die an der Hülse unter beliebig geeigneten Winkeln zueinander angeordnet sind und geeignet zu wählende Bogenabschnitte entlang der Hüles umspannen, möglich.

Unabhängig von einer konkreten Ausgestaltung des mindestens einen Gleitelements ist dieses mindestens eine Gleitelement zwischen den magnetflussleitenden Ringen in radialer Richtung gelagert, wobei zwischen dem mindestens einem Gleitelement und mindestens einem der Ringe der Magnetflusseinheit ein Lagerspiel vorhanden und/oder vorgesehen ist, so dass sich das mindestens eine Gleitelement und die Ringe und/oder das Trageelement für die Ringe zueinander reibungsfrei drehen können.

Die Hülse der Sensoreinheit ist in axialer Richtung zwischen dem Arretierungsring und einem der beiden Ringe der Magnetflusseinheit, üblicherweise dem inneren Ring, angeordnet, wobei zwischen der Hülse und dem Arretierungsring sowie zwischen der Hülse und dem Ring der Magnetflusseinheit ebenfalls ein Lagerspiel angeordnet ist. Dadurch ist ebenfalls eine ebenfalls reibungsfreie Drehung der Hülse der Sensoreinheit zu den an der ersten Welle befestigten, weiteren Komponenten der Sensoranordnung bei einer Drehung der ersten Welle möglich.

Außerdem umfasst die Sensoreinheit mindestens einen magnetfeldsensitiven Sensor, der an einer Position der Hülse an dieser angeordnet ist. Hierzu kann der magnetfeldsensitive Sensor an der Hülse über eine Leiterplatte befestigt sein, auf der wiederum der magnetfeldsensitive Sensor angeordnet ist. Dabei ist der magnetfeldsensitive Sensor weiterhin zwischen den beiden magnetflussleitenden Ringen der Magnetflusseinheit angeordnet.

Weiterhin kann auch ein sogenanntes Magnetpolrad als weitere Komponente der Sensoranordnung vorgesehen sein. Dabei ist dieses Magnetpolrad als ringförmige Anordnung von Permanentmagneten ausgebildet, die an der zweiten Welle, die sich relativ zu der ersten Welle drehen kann, angeordnet ist.

Bei einer Drehung der beiden Wellen relativ zueinander wird das Magnetpolrad relativ zu den magnetflussleitenden Ringen gedreht, wodurch eine Winkeldifferenz zwischen dem Magnetpolrad und den magnetflussleitenden Ringen entsteht. Durch diese Winkeldifferenz wird im Bereich des zu den beiden Wellen ortsfest angeordneten magnetfeldsensitiven Sensors eine Änderung der durch die Ringe verstärkten magnetischen Feldstärke verursacht, die in ein Signal, das von dem Drehmoment abhängig ist, umgewandelt werden kann.

Die erfindungsgemäße Sensoranordnung ist dazu ausgebildet, sämtliche Schritte des vorgestellten Verfahrens durchzuführen. Dabei können einzelne Schritte dieses Verfahrens auch von einzelnen Komponenten der Sensoranordnung durchgeführt werden. Weiterhin können Funktionen der Sensoranordnung oder Funktionen von einzelnen Komponenten der Sensoranordnung als Schritte des Verfahrens umgesetzt werden. Außerdem ist es möglich, dass Schritte des Verfahrens als Funktionen wenigstens einer Komponente der Sensoranordnung oder der gesamten Sensoranordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt in schematischer Darstellung eine erste Ausführungsform der erfindungsgemäßen Sensoranordnung.
- Figur 2: zeigt in schematischer Darstellung Details einer Magnetflusseinheit der ersten Ausführungsform der erfindungsgemäßen Sensoranordnung.
- Figur 3: zeigt in schematischer Darstellung Details der ersten Ausführungsform der erfindungsgemäßen Sensoranordnung.
- Figur 4: zeigt in schematischer Darstellung Details eines Arretierungsrings der ersten Ausführungsform der erfindungsgemäßen Sensoranordnung.
- Figur 5: zeigt in schematischer Darstellung Details zu einer Lagerung der ersten Ausführungsform der erfindungsgemäßen Sensoranordnung.
- Figur 6: zeigt in schematischer Darstellung Details zu einer Leiterplatte der ersten Ausführungsform der erfindungsgemäßen Sensoranordnung.
- Figur 7: zeigt in schematischer Darstellung ein weiteres Beispiel für eine Leiterplatte als eine Komponente der erfindungsgemäßen Sensoranordnung.
- Figur 8: zeigt Beispiele zu einer Anordnung der Leiterplatte aus Figur 7 innerhalb einer Ausführungsform der erfindungsgemäßen Sensorandordnung.
- Figur 9: zeigt in schematischer Darstellung eine zweite Ausführungsform der erfindungsgemäßen Sensoranordnung.
- Figur 10: zeigt in schematischer Darstellung Details einer Magnetflusseinheit der zweiten Ausführungsform der erfindungsgemäßen Sensoranordnung.
- Figur 11: zeigt in schematischer Darstellung Details eines Arretierungsrings der zweiten Ausführungsform der erfindungsgemäßen Sensoranordnung.
- Figur 12: zeigt in schematischer Darstellung Details zu einer Lagerung der zweiten Ausführungsform der erfindungsgemäßen Sensoranordnung.
- Figur 13: zeigt in schematischer Darstellung Details zu einer Leiterplatte der zweiten Ausführungsform der erfindungsgemäßen Sensoranordnung.
- Figur 14: zeigt in schematischer Darstellung ein Beispiel einer Magnetflusseinheit einer dritten Ausführungsform der erfindungsgemäßen Sensoranordnung.
- Figur 15: zeigt in schematischer Darstellung ein Beispiel der Sensoreinheit der dritten Ausführungsform der erfindungsgemäßen Sensoranordnung.
- Figur 16: zeigt in schematischer Darstellung eine vierte Ausführungsform der Sensoranordnung mit einem ersten Beispiel für eine Anordnung zum Erfassen eines Drehwinkels.
- Figur 17: zeigt in schematischer Darstellung Details aus Figur 16.
- Figur: 18 zeigt in schematischer Darstellung ein zweites Beispiel einer Anordnung zum Bestimmen eines Drehwinkels, die bei einer Ausführungsform der erfindungsgemäßen Sensoranordnung verwendet werden kann.
- Figur 19: zeigt Details aus Figur 18.
- Figur 20: zeigt in schematischer Darstellung eine fünfte Ausführungsform der erfindungsgemäßen Sensoranordnung.

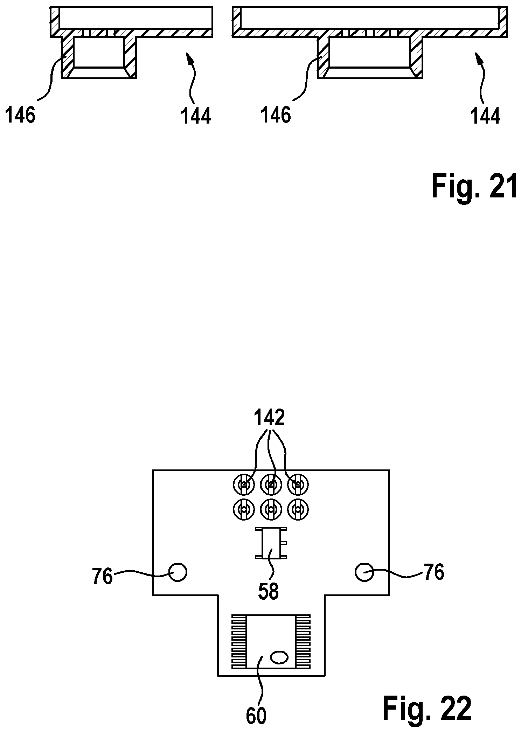

- Figur 21: zeigt ein Detail aus Figur 20.
- Figur 22: zeigt ein weiteres Detail aus Figur 20.
- Figur 23: zeigt ein Beispiel eines aus dem Stand der Technik bekannten Drehmomentsensors.
- Figur 24: zeigt Details aus Figur 23.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten

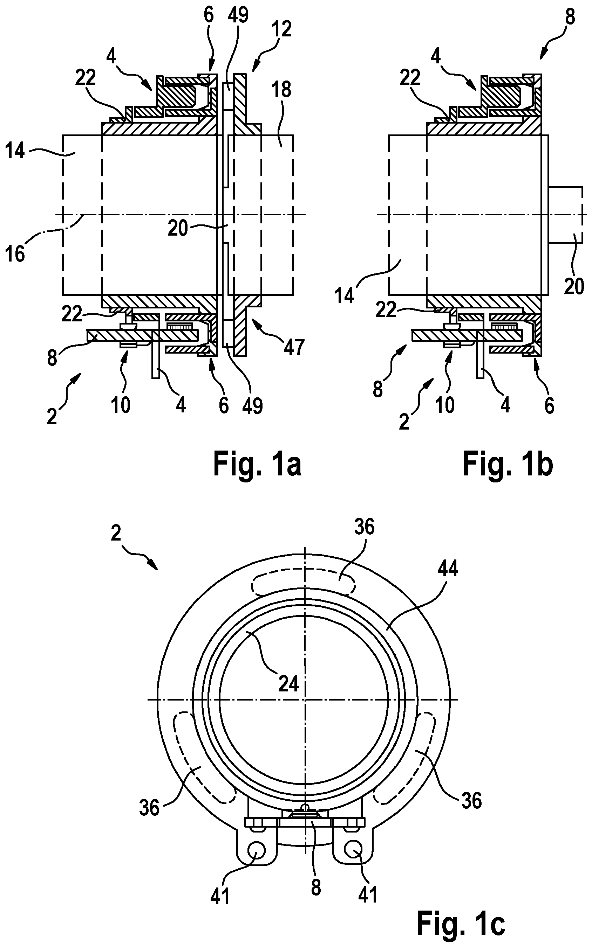

Für die in Figur 1 schematisch dargestellte erste Ausführungsform der erfindungsgemäßen Sensoranordnung 2 sind in Figur 1a eine Sensoreinheit 4, eine Magnetflusseinheit 6, eine Leiterplatte 8 und ein Index-Magnet 10 und eine Magneteinheit 12 dargestellt. In Figur 1b wird auf die Magneteinheit 12 verzichtet. Figur 1c zeigt die Sensoranordnung 2 in Draufsicht.

Es ist vorgesehen, dass die Magnetflusseinheit 6 an einer ersten Welle 14, die sich um eine Drehachse 16 dreht, angeordnet, üblicherweise befestigt, ist. Die Sensoreinheit 4 ist an einem nicht weiter dargestellten Bauteil befestigt und somit zu der ersten Welle 14 ortsfest angeordnet. Bei einer Drehung der Welle 14 dreht sich diese relativ zu dem Bauteil. Somit ergibt sich, dass auch die Magnetflusseinheit 6 relativ zu der Sensoreinheit 4 gedreht wird.

Die Magneteinheit 12 ist auf einer zweiten Welle 18, die sich koaxial zu der ersten Welle 14 um die gemeinsame Drehachse 16 drehen kann, angeordnet. Die beiden genannten Wellen 14, 18 sind über einen Torsionsstab 20 miteinander verbunden. Bei einer Drehung der ersten Welle 14 relativ zu der zweiten Welle 18 kommt es zu einer Verdrillung des Torsionsstabs 20, wodurch ein Drehmoment erzeugt wird. Dieses Drehmoment kann mit sämtlichen, auch in den weiteren Figuren, vorgestellten Ausführungsformen der erfindungsgemäßen Sensoranordnung 2 ermittelt werden.

Außerdem zeigt Figur 1 einen an der Welle 14 angeordneten, bspw. befestigten, Arretierungsring 22 als eine weitere Komponente der Sensoranordnung 2. Bei einer Drehung der Welle 14 dreht sich der Arretierungsring 22 ebenfalls relativ zu der Sensoreinheit 4.

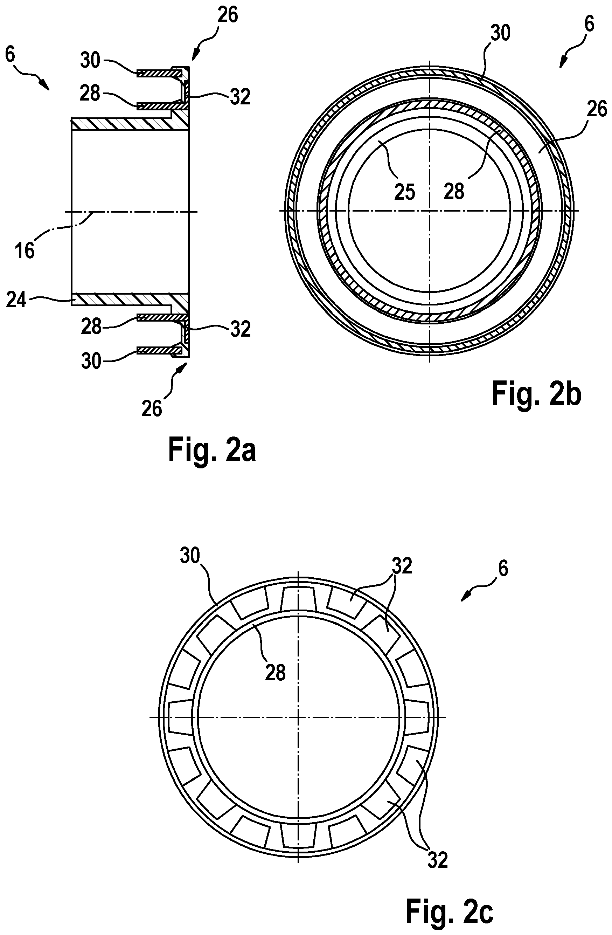

Details zu der Magnetflusseinheit 6 der ersten Ausführungsform der erfindungsgemäßen Sensoranordnung 2 werden anhand der Figur 2 beschrieben, wobei Figur 2a die Magnetflusseinheit 6 in einer Schnittansicht, Figur 2b in einer ersten Draufsicht und Figur 2c in einer zweiten Draufsicht schematisch zeigt.

Die Magnetflusseinheit 6 umfasst ein ringförmiges Trageelement 24 mit einem im Profil U-förmigen Doppelring 26, in den ein innerer magnetflussleitender Ring 28 und ein äußerer magnetflussleitender Ring 30 eingebettet sind. Außerdem weisen beide Ringe 28, 30 gegenläufig gebogene, radial ausgerichtete Finger 32 auf. Der innere und der äußere Ring 28, 30 sind wie die Finger 32 aus einem ferromagnetischen Metall, üblicherweise einer Legierung wie bspw. NiFe. Die Ringe 28, 30 sind mit engen Toleranzen in Kunststoff des Trageelements 24 und/oder Kunststoff des U-förmigen Doppelrings 26 als Komponenten des Trageelements 24 eingespritzt.

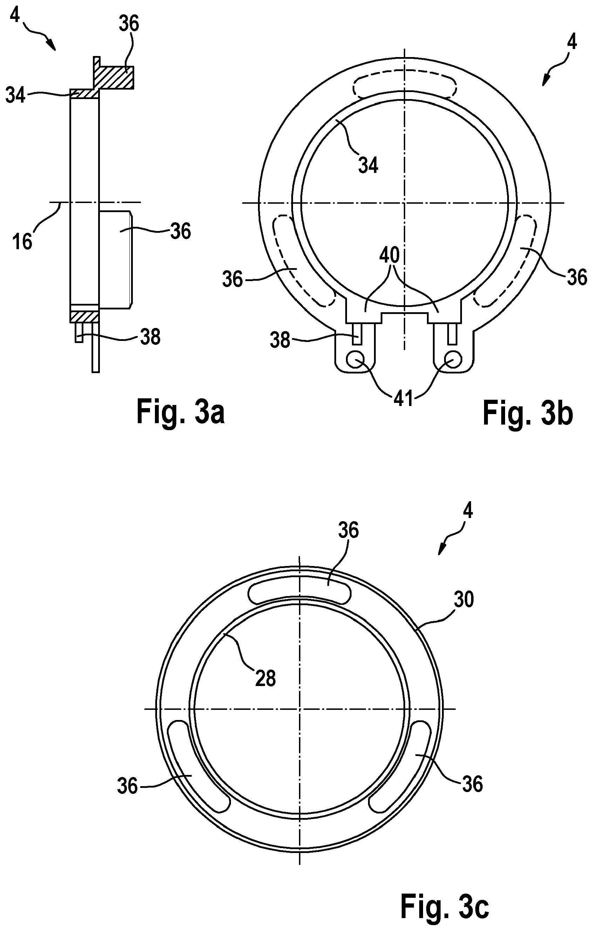

Details zu der Sensoreinheit 4 der ersten Ausführungsform der erfindungsgemäßen Sensoranordnung 2 sind in Figur 3 schematisch dargestellt. Dabei zeigt Figur 3a die Sensoreinheit 4 in einer Schnittansicht, Figur 3b zeigt die Sensoreinheit 4 in einer ersten Draufsicht und Figur 3c die Sensoreinheit 4 sowie die beiden Ringe 28, 30 in einer zweiten Draufsicht.

Die Sensoreinheit 4 ist ebenfalls kreisförmig ausgebildet und umfasst eine Hülse 34, an der in der vorliegenden Ausführungsform drei um 120° versetzte Gleitschuhe 36 angeordnet sind. Unabhängig von der Ausführungsform der Sensoranordnung 2 kann die Sensoreinheit 4 eine beliebige geeignete Anzahl n an Gleitschuhen 36 umfassen, die entlang der Hülse 34 unter einem Winkelabstand von 360°/n zueinander symmetrisch angeordnet sind. Außerdem zeigt Figur 3 Zapfen 38 für die Leiterplatte 8, Anlageflächen 40 für die Leiterplatte 8 sowie Arretierungslöcher 41, mit der die Sensoreinheit 4 an einem Gehäuse, das die Welle 14 umschließt, und/oder an dem Bauteil ortsfest zu befestigen ist.

Die in Figur 3 gezeigte Ausführungsform der Sensoreinheit 4 ist als ein frei fallendes Spritzgussteil ausgebildet, an dem die Leiterplatte 8 mit der elektronischen Schaltung, Hall-Schaltkreisen, passiven Komponenten und einem Stecker vertikal befestigt wird. Im gezeigten Beispiel kann die Leiterplatte 8 durch Warmverstemmen von Zapfen 38 an der Sensoreinheit 4 befestigt werden. Die an der Hülse 34 der Sensoreinheit 4 angeordneten drei Gleitschuhe 36 sind dazu ausgebildet, eine partielle Lagerfunktion zwischen der Sensoreinheit 4 und den Ringen 28,30 der Magnetflusseinheit 6 zu ermöglichen.

Bei der ersten Ausführungsform der Sensoranordnung 2 sind die Hülse 34 und die Gleitschuhe 36 der Sensoreinheit 4 zwischen den magnetflussleitenden Ringen 28, 30 der Magnetflusseinheit 6 selbstführend gelagert.

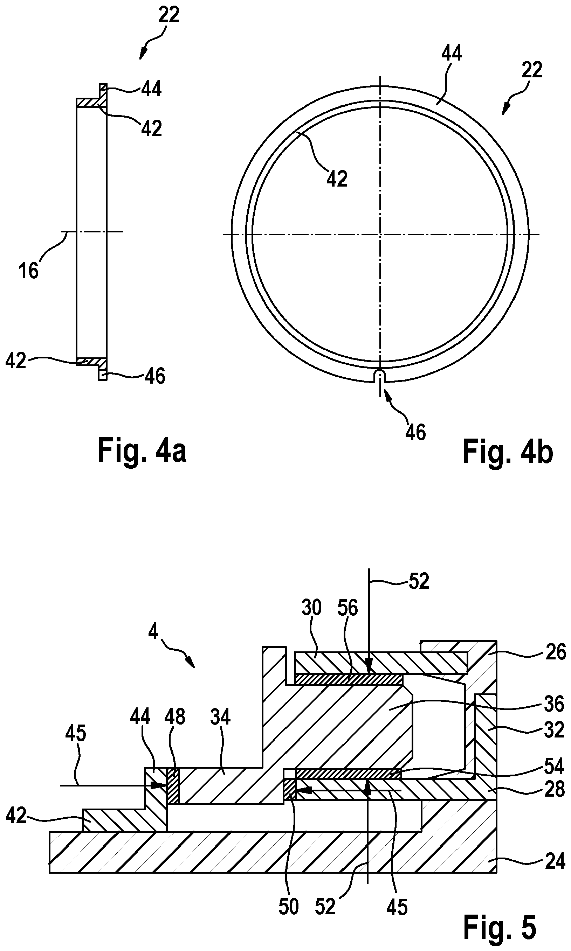

Details zu dem Arretierungsring 22 der ersten Ausführungsform der Sensoranordnung 2 sind in Figur 4a in Schnittaussicht und in Figur 4b in Draufsicht schematisch dargestellt. Dieser hier aus Metall bestehende Arretierungsring 22 umfasst eine Hülse 42 mit einem Flansch 44. Außerdem umfasst der Flansch 44 als Index-Element eine Nut 46, die als Schaltpunkt für einen Index zur Zählung von Umläufen der Welle 14 ausgebildet ist, wenn sich der Arretierungsring 22 mit der Welle 14 relativ zu der Sensoreinheiten 4 dreht.

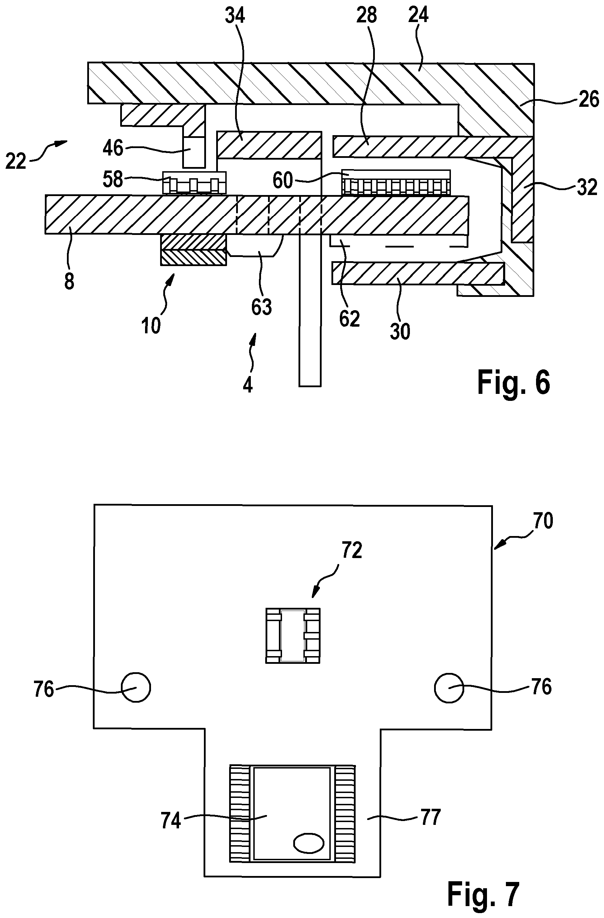

Die lediglich in Figur 1b dargestellte Magneteinheit 12 umfasst einen Tragering 47, an dem ein Ring aus Magneten 49 und somit ein sogenanntes Magnetpolrad angeordnet ist. Bei einer Drehung der beiden in Figur 1 gezeigten Wellen 14, 18 relativ zueinander werden Magnetfelder, die durch die Magnete 49 erzeugt werden, relativ zu der Sensoreinheit 4 und der Leiterplatte 8 gedreht. Ein magnetischer Fluss der Magnetfelder von den sich drehenden Magneten 49 wird durch die Magnetflusseinheit 6 üblicherweise auf einen Bereich zwischen den magnetflussleitenden Ringen 28, 30, in den der Hall-Schaltkreis 60 (Figur 6) angeordnet ist, konzentriert.

Wie in der Figur 1 dargestellt, ist die Sensoreinheit 4 zur Magnetflusseinheit 6 axial arretiert. Dazu ist der Arretierungsring 22 aus Metall an der Welle 14 montiert, der wiederum Gleiteigenschaften zu der Sensoreinheit 4 aufweist. Durch die Nut 46 im Arretierungsring 22 kann eine Index-Funktion als Umlauf-Zählfunktion zum Zählen der Umläufe der Welle 14 durch die Sensoranordnung 2 umgesetzt werden.

Figur 5 zeigt in schematischer Darstellung eine Lagerung der Hülse 34 sowie eines an der Hülse 34 angeordneten Gleitschuhs 36 als eine Ausgestaltung eines Gleitelements relativ zu dem Flansch 44 des Arretierungsrings 22 und den beiden Ringen 28, 30 der Magnetflusseinheit 6. Dabei ist zur Bereitstellung einer axialen Lagerung in axialer Richtung 45 zwischen dem Flansch 44 des Arretierungsrings 22 und der Hülse 34 der Sensoreinheit 4 ein erstes axiales Lagerspiel 48 vorgesehen. Ebenfalls in axialer Richtung 45 ist zwischen der Hülse 34 der Sensoreinheit 4 und dem inneren Ring 28 der Magnetflusseinheit 6 ein zweites axiales Lagerspiel 50 vorgesehen. In radialer Richtung 52 ist zwischen dem inneren Ring 28 der Magnetflusseinheit 6 und dem Gleitschuh 36 ein erstes radiales Lagerspiel 54 und zwischen dem Gleitschuh 36 und dem äußeren Ring 30 der Magnetflusseinheit 6 ein zweites radiales Lagerspiel 56 vorgesehen.

Mit den Lagerspielen 48, 50, 54, 56, bei denen es sich um ringförmige Luftspalte zwischen der oben genannten Komponente der Sensoranordnung 2 handeln kann, werden die selbstführende Lagerung zwischen der Sensoreinheit 4 und der Magnetflusseinheit 6 erreicht. Die drei Gleitschuhe 36 der Sensoreinheit 4 gleiten mit einem definierten Spiel radial zwischen den magnetflussleitenden Ringen 28, 30 der Magnetflusseinheit 6, das mit den beiden radialen Lagerspielen 54, 56 bereitgestellt wird. Eine axiale Arretierung der Sensoreinheit 4 erfolgt durch eine Lagerung der Sensoreinheit 4 zwischen der Stirnseite des inneren Rings 28 über das zweite axiale Lagerspiel 50 und dem Arretierungsring 22 über das erste axiale Lagerspiel 48. Durch Kopplung über die genannten Lagerspiele 48, 50, 54, 56 bilden die Sensoreinheit 4 und die Magnetflusseinheit 6 eine Einheit.

Details zu einer Anordnung der Leiterplatte 8 innerhalb der ersten Ausführungsform der erfindungsgemäßen Sensoranordnung 2 sind in Figur 6 schematisch dargestellt. Dabei zeigt Figur 6, dass auf einer inneren Seite oder einer Oberseite der Leiterplatte 8 in der Nähe des Flansches 44 des Arretierungsrings 22 ein Hall-Schalter 58 als ein magnetfeldsensitiver Sensor angeordnet ist. Ebenfalls auf derselben axialen Höhe ist auf einer Unterseite bzw. einer äußeren Seite der Leiterplatte 8 der Index-Magnet 10 angeordnet. Zwischen den beiden Ringen 28, 30 der Magnetflusseinheit 6 ist auf der Oberseite der Leiterplatte 8 ein als Dual-Hall-Schaltkreis ausgebildeter Hall-Schaltkreis 60 als ein weiterer magnetfeldsensitiver Sensor angeordnet. Außerdem ist in Figur 6 ein optionaler Sammler 62 auf der Unterseite angedeutet.

Die Leiterplatte 8 ist an der Sensoreinheit 4 vertikal montiert und dabei so an der Sensoreinheit 4 befestigt, dass ein Finger der Leiterplatte 8, an dem der Hall-Schaltkreis 60 angeordnet ist, zwischen den magnetflussleitenden Ringen 28, 30 der Magnetflusseinheit 6 angeordnet ist und somit den Magnetfluss direkt messen kann.

Zur Umsetzung der Index-Funktion ist auf der Leiterplatte 8 der Hall-Schalter 58 montiert, wobei sich auf der Gegenseite der Leiterplatte 8 der als kleiner Permanentmagnet ausgebildete Index-Magnet 10 bspw. durch Klebung montiert ist. Der Hall-Schalter 58 liegt genau in der Ebene des Arretierungsrings 22. Sobald die Nut 46 im Arretierungsring 22 bei einer Umdrehung der Welle 14 am Hall-Schalter 58 vorbeiläuft, wird der magnetische Fluss des Index-Magneten 10 beeinflusst und im Hall-Schalter 58 ein Signal erzeugt. Die Leiterplatte 8 ist über einen warmverstemmten Zapfen 63, der durch Warmverstemmen aus dem in Figur 3 gezeigten Zapfen 38 hervorgeht, an der Sensoreinheit 4 befestigt.

Bei Betrieb der anhand der Figur 1 bis 6 vorgestellten ersten Ausführungsform der erfindungsgemäßen Sensoranordnung 2 ist vorgesehen, dass sich die erste Welle 14, auf der die Sensoreinheit 4, die Magnetflusseinheit 6 sowie der Arretierungsring 22 koaxial angeordnet sind, relativ zu der zweiten Welle 18, auf der koaxial die Magneteinheit 12 angeordnet ist, drehen, wodurch der Torsionsstab 20 als verbindendes Element zwischen den beiden Wellen 14, 18 verdrillt wird, wodurch wiederum ein Drehmoment erzeugt wird.

Dabei drehen sich die Magnete 49 der Magneteinheit 12 relativ zu der Sensoreinheit 4, der Magnetflusseinheit 6, der Leiterplatte 8 sowie dem Arretierungsring 22. Die durch die Magnete 48 erzeugten, sich drehenden Magnetfelder werden durch die Ringe 28, 30 sowie die Finger 32 der Magnetflusseinheit 6 verstärkt. Die sich ändernden Magnetfelder werden weiterhin durch den Hall-Schaltkreis 60 als Komponente der Sensoreinheit 4 detektiert.

Figur 7 zeigt in schematischer Darstellung ein weiteres Beispiel einer Leiterplatte 70, die bei unterschiedlichen Ausführungsformen von erfindungsgemäßen Anordnungen eingesetzt werden kann. Auf dieser Leiterplatte 70 sind ein Hall-Schalter 72, entsprechend dem Hall-Schalter 58 aus Figur 6, zum Erfassen von Umläufen der Welle 14 relativ zu der Sensoreinheit 4 sowie ein Hall-Schaltkreis 74, entsprechend dem Hall-Schaltkreis 60 aus Figur 6, angeordnet. Außerdem umfasst die Leiterplatte 70 zwei Befestigungsöffnungen 76, über die die Leiterplatte 70 bspw. über den warmverstemmten Zapfen 63 an einer Sensoreinheit 4 befestigt werden kann. Die Leiterplatte 70 weist eine T-Form auf, wobei der Hall-Schaltkreis 74 bzw. Hall-Schaltkreis 60 auf einem Finger 77 der Leiterplatte 70, der eine verringerte Breite aufweist, angeordnet ist. Der Finger 77 mit dem Hall-Schaltkreis 74 bzw. dem Hall-Schaltkreis 60 ist zwischen den Ringen 28, 30 einer Ausführungsform der Magnetflusseinheit 2 anzuordnen.

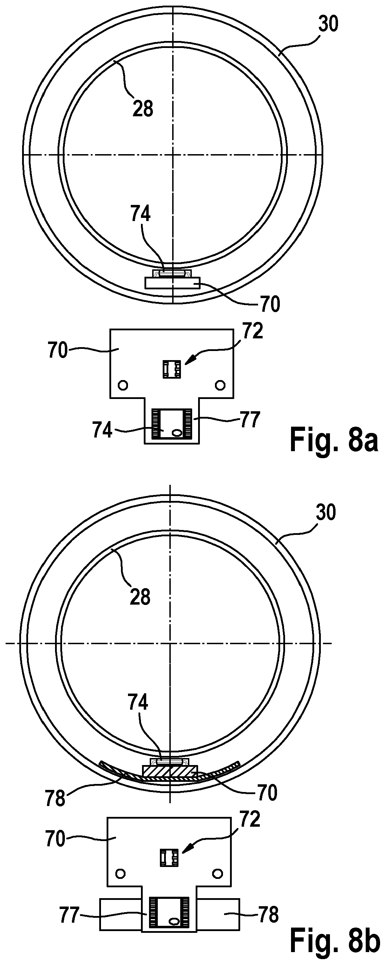

Wie die Leiterplatte 70 relativ zu den Ringen 28, 30 der Magnetflusseinheit 6 bspw. angeordnet ist, zeigen die Figuren 8a und 8b in schematischer Darstellung. Dabei ist in Figur 8b zusätzlich noch ein Beispiel für einen Sammler 78 dargestellt, der auf der Unterseite bzw. Rückseite der Leiterplatte 70 montiert ist.

Falls der auf dem Hall-Schalterkreis 74 wirkende magnetische Fluss nicht ausreichend groß ist, kann optional auf der Leiterplatte 8 der Sammler 78 in Form eines Metallplättchens, bspw. aus NiFe, befestigt werden, das den magnetischen Fluss zusätzlich sammelt.

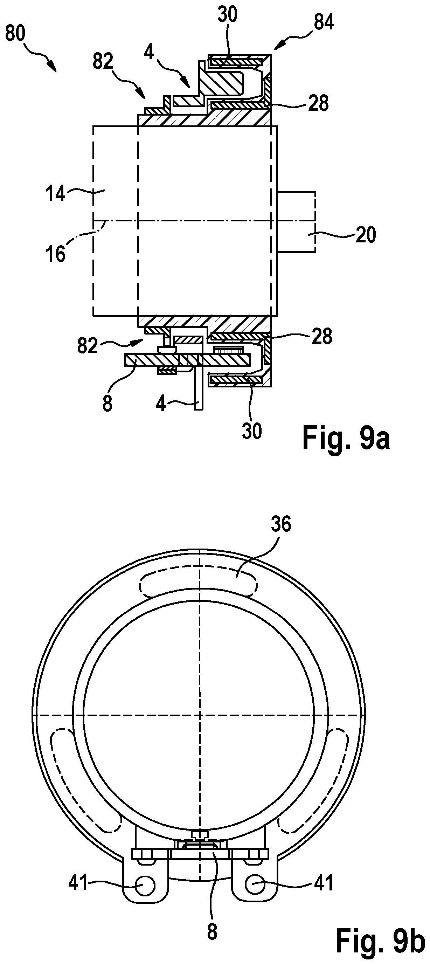

Die in Figur 9a in Schnittansicht und in Figur 9b in Draufsicht dargestellte zweite Ausführungsform der erfindungsgemäßen Sensoranordnung 80 weist ebenfalls eine Sensoreinheit 4 auf. Die zweite Ausführungsform der Sensoranordnung 80 unterscheidet sich von der ersten Ausführungsform der erfindungsgemäßen Sensoranordnung 2 durch eine weitere Ausführungsform des Arretierungsrings 82 sowie eine weitere Ausführungsform der Magnetflusseinheit 84.

Die Sensoreinheit 4 ist zwischen den magnetflussleitenden Ringen 28, 30 der Magnetflusseinheit 84 selbstführend gelagert, wobei die magnetflussleitenden Ringe 28, 30 vollständig mit Kunststoff umspritzt sind. Eine Gleitlagerfunktion zwischen dem Kunststoff der Sensoreinheit 4 und dem Kunststoff der Magnetflusseinheit 6 erfolgt zwischen den Ringen 28, 30.

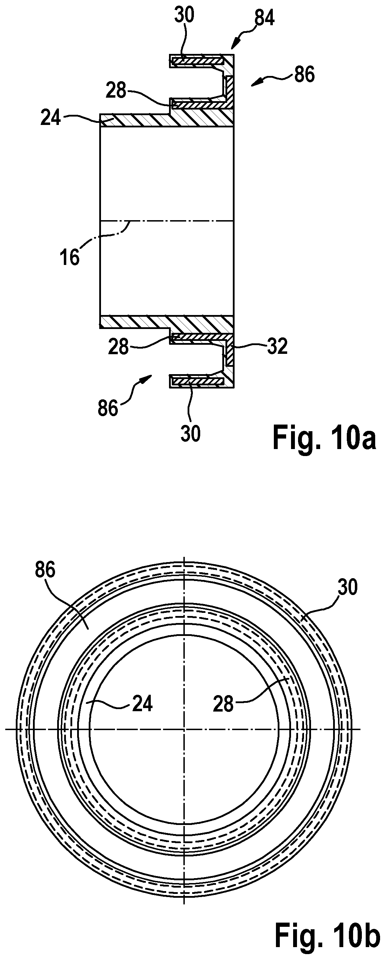

Details zu der zweiten Ausführungsform der Magnetflusseinheit 84 sind in Figur 10a in Schnittansicht und in Figur 10b in Draufsicht schematisch dargestellt. Hier umfasst die Magnetflusseinheit 84 ebenfalls ein Trageelement 24 und einen dazu koaxial umlaufenden, U-förmigen Doppelring 86, in den die beiden Ringe 28, 30 sowie die Finger 32 eingebettet sind. In der vorliegenden Ausführungsform bilden das Trageelement 24 und der U-förmige Doppelring 86 ein zusammenhängendes Bauteil.

Auch die zweite Ausführungsform der Magnetflusseinheit 84 umfasst einen äußeren und einem inneren Ring 28, 30 aus Metall, bspw. NiFe, und gegenläufig gebogene Finger 32. Die Ringe 28, 30 sind mit engen Toleranzen in Kunststoff vollständig in den U-förmigen Doppelring 86 eingespritzt. Lagertoleranzen zu Komponenten der Sensoreinheit 4 werden somit nicht mehr durch den Herstellungsprozess der Ringe 28, 30, sondern durch die Umspritzung der Ringe 28, 30 mit Kunststoff bestimmt.

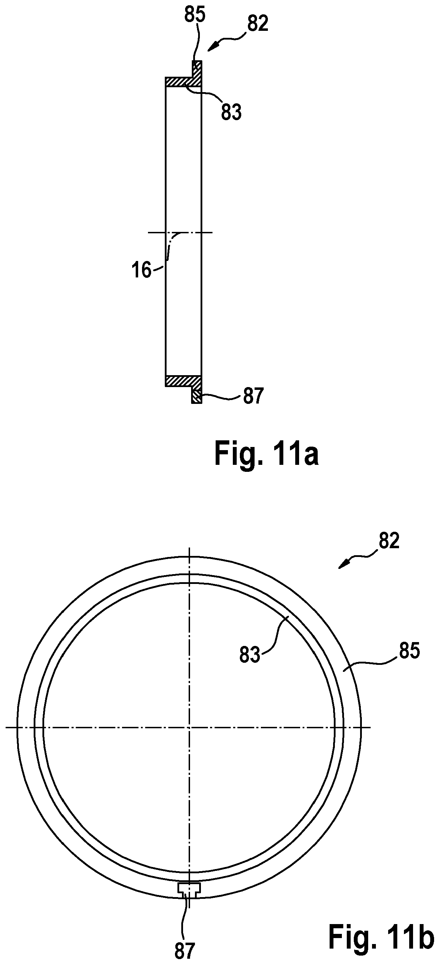

Die in Figur 11a in Schnittansicht und in Figur 11b in Draufsicht schematisch dargestellte Ausführungsform des Arretierungsrings 82 ist bei der zweiten Ausführungsform der erfindungsgemäßen Sensoranordnung 80 als Kunststoffring ausgebildet, der eine Hülse 83 sowie einen Flansch 85 umfasst. Außerdem umfasst der Arretierungsring 82 in einem unteren Abschnitt ein Metallplättchen 87, das als Index-Element für einen Schaltpunkt einer Umdrehung der Welle 14 verwendet wird. Die Änderung des Magnetflusses zur Bereitstellung der Index-Funktion erfolgt durch das im Flansch 85 eingespritzte Metallplättchen 87.

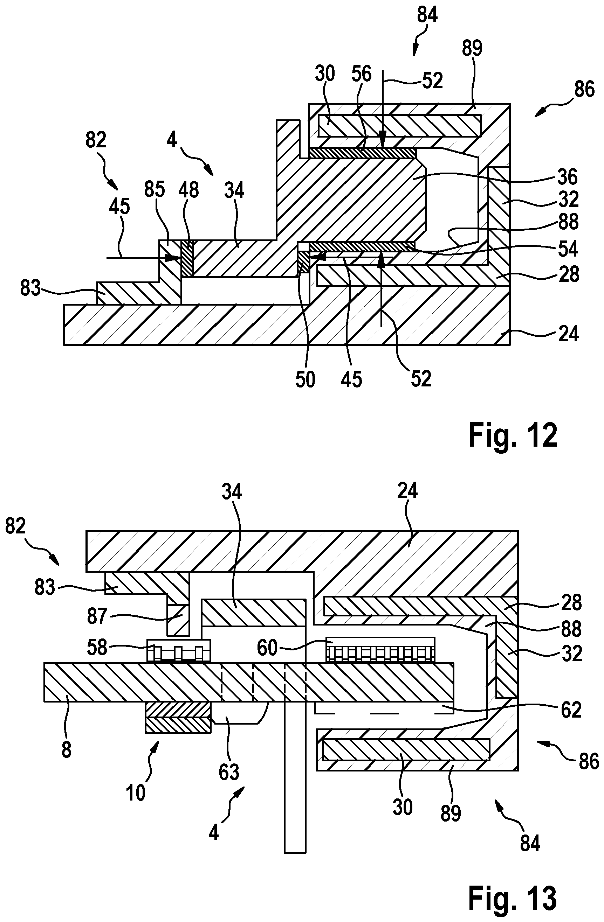

Figur 12 zeigt in schematischer Darstellung eine Lagerung der Hülse 34 sowie eines als Gleitschuh 36 ausgebildeten Gleitelements der Sensoreinheit 4 relativ zu dem Flansch 85 der zweiten Ausführungsform des Arretierungsrings 82 und den beiden Ringen 28, 30 der Magnetflusseinheit 84, die in dem U-förmigen Doppelring 86 eingebettet sind. Dabei ist zur Bereitstellung einer axialen Lagerung in axialer Richtung 45 zwischen dem Flansch 85 des Arretierungsrings 82 und der Hülse 34 der Sensoreinheit 4 ein erstes axiales Lagerspiel 48 vorgesehen. Ebenfalls in axialer Richtung 45 ist zwischen der Hülse 34 der Sensoreinheit 4 und einem ersten Schenkel 88 des U-förmigen Doppelrings 86, in dem der innere Ring 28 der Magnetflusseinheit 84 angeordnet ist, ein zweites axiales Lagerspiel 50 vorgesehen. In radialer Richtung 52 ist zwischen dem ersten Schenkel 88 mit dem inneren Ring 28 der Magnetflusseinheit 84 und dem Gleitschuh 36 ein erstes radiales Lagerspiel 54 und zwischen dem Gleitschuh 36 und dem äußeren Ring 30 der Magnetflusseinheit 84, der in einem äußeren Schenkel 89 des U-förmigen Doppelrings 86 angeordnet ist, ein zweites radiales Lagerspiel 56 vorgesehen.

Die drei Gleitschuhe 36 der Sensoreinheit 4 gleiten bei einer Drehung der Welle mit einem definierten Spiel radial zwischen den mit Kunststoff vollständig umspritzten flussleitenden metallischen Ringen 28, 30 der Magnetflusseinheit 84. Die axiale Arretierung der Sensoreinheit 4 erfolgt durch Lagerung der Sensoreinheit 4 zwischen der umspritzten Stirnseite des inneren Rings 28 und dem Arretierungsring 82. Somit bilden die Sensoreinheit 4 und die Magnetflusseinheit 84 eine Einheit.

Details zu einer Anordnung der Leiterplatte 8 an der zweiten Ausführungsform der erfindungsgemäßen Sensoranordnung 80 sind in Figur 13 schematisch dargestellt. Dabei zeigt Figur 13, dass auf einer oberen Seite oder einer Innenseite der Leiterplatte 8 in der Nähe des Arretierungsrings 82 ein Hall-Schalter 58 als magnetfeldsensitiver Sensor angeordnet ist. Ebenfalls auf derselben axialen Höhe ist auf einer Außenseite bzw. einer unteren Seite der Leiterplatte 8 der Index-Magnet 10 angeordnet. Zwischen den beiden Ringen 28, 30 der Magnetflusseinheit 84 ist auf der Innenseite der Leiterplatte 8 ein Hall-Schaltkreis 60 als magnetfeldsensitiver Sensor angeordnet. Außerdem ist in Figur 13 ein optionaler Sammler 62 angedeutet. Sobald das Metallplättchen 87 im Arretierungsring 82 bei einer Umdrehung am Hall-Schalter 58 vorbeiläuft, wird der magnetische Fluss des als Permanentmagnet ausgebildeten Index-Magnets 10 beeinflusst und zur Umsetzung der Index-Funktion im Hall-Schalter 58 ein Signal erzeugt.

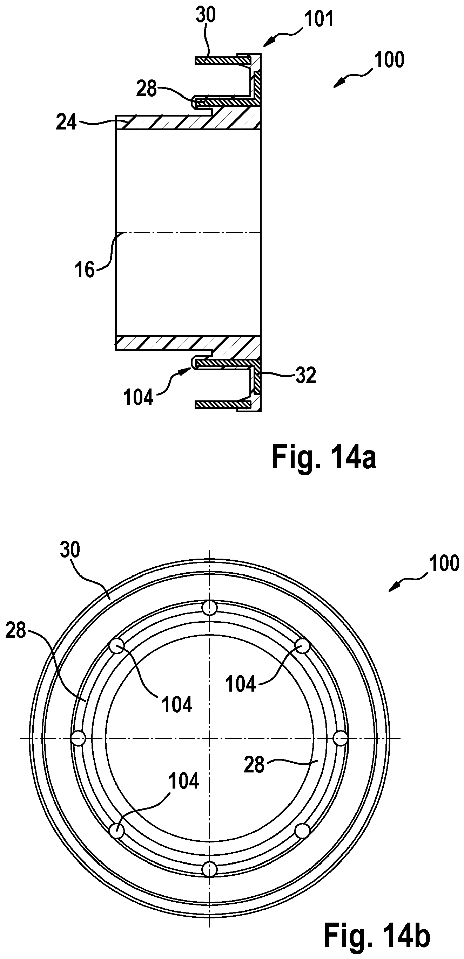

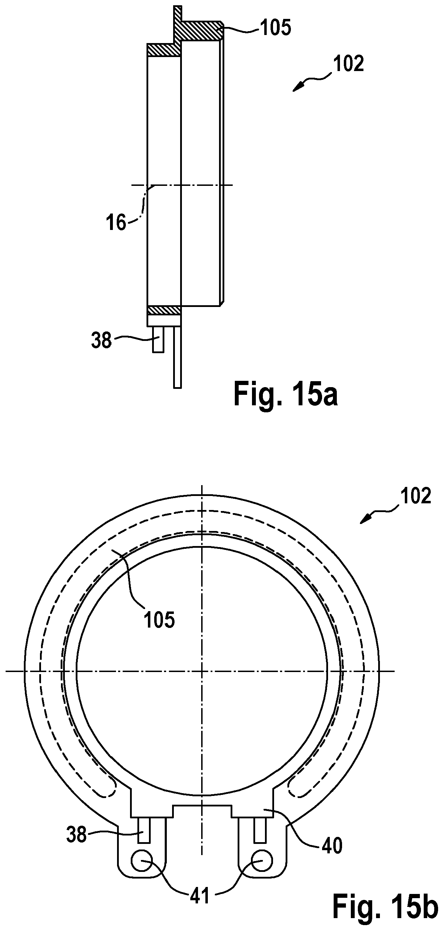

Von der dritten Ausführungsform der erfindungsgemäßen Sensoranordnung ist in Figur 14 eine Ausgestaltung einer Magnetflusseinheit 100 und in Figur 15 eine Ausgestaltung einer Sensoreinheit 102 schematisch dargestellt.

Das dritte Beispiel für einen Magnetflusseinheit 100 ist in Figur 14a in Schnittansicht und in Figur 14b in Draufsicht schematisch dargestellt. Auch diese Ausführungsform der Magnetflusseinheit 100 zeigt ein Trageelement 24 mit einem U-förmigen Doppelring 101, an dem die Ringe 28, 30 sowie die Finger 32 befestigt sind. Bei dieser dritten Ausgestaltung der Magnetflusseinheit 100 sind die Ringe 28, 30 nur partiell umspritzt, wobei der innere Ring 28 mit insgesamt acht Lagerzapfen 104 im Winkelabstand von 45° teilweise umspritzt ist. Dagegen ist der äußere Ring 30, wie bei der ersten Ausführungsform der Magnetflusseinheit 6, nicht umspritzt.

Bei der Magnetflusseinheit 100 sind der innere und der äußere Ring 28, 30 aus NiFe und weisen gegenläufig gebogene Finger 32 auf. Diese Ringe 28, 30 bzw. wenigstens einer der Ringe 28, 30 sind bzw. ist mit engen Toleranzen in Kunststoff partiell so umspritzt, dass die Lagerzapfen 104 sphärische Oberflächen aufweisen. Mit den Lagerzapfen 104 erfolgt eine punktuelle Lagerung mindestens eines Lagerelements der Sensoreinheit 102 (Figur 15) an der Magnetflusseinheit 100. Die Lagertoleranzen zur Sensoreinheit 102 werden somit nicht mehr durch den Herstellungsprozess der Ringe 28, 30, sondern durch die partielle Umspritzung der Lagerzapfen 104 mindestens einer dieser Ringe 28, 30 mit Kunststoff bestimmt.

Die anhand von Figur 15a in Schnittdarstellung und anhand von Figur 15b in Draufsicht schematisch dargestellte zweite Ausgestaltung der Sensoreinheit 102 unterscheidet sich von der ersten Ausgestaltung der Sensoreinheit 4 dadurch, dass diese Sensoreinheit 102 statt Gleitschuhen 36 als Gleitelement eine Umlaufschiene 105, die einen Winkel ≦ 270 C° umfasst, aufweist.

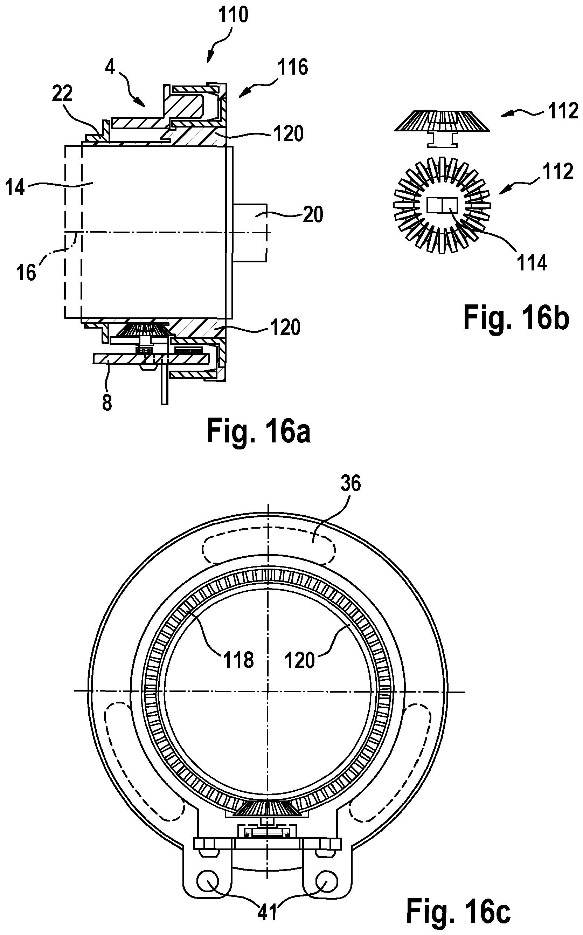

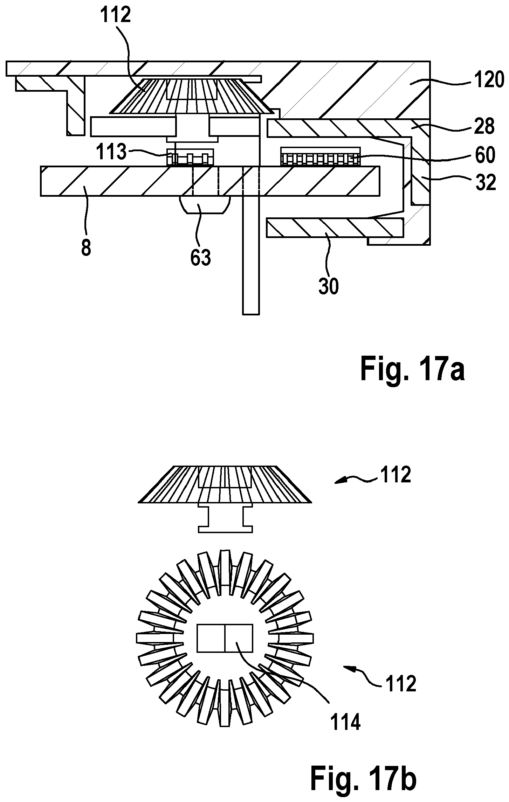

Anstelle einer Index-Funktion ist in der vierten Ausführungsform der Sensoranordnung 110, die in Figur 16a in Schnittaussicht und in Figur 16b in Draufsicht schematisch dargestellt ist, eine Lenkwinkelfunktion integriert. Erfindungsgemäß wird dazu ein kleines Kegelzahnrad 112 (Figur 16b oder 17b) so an der Sensoreinheit 4 befestigt, dass ein Hall-Schaltkreis 113 als magnetfeldsensitiver Sensor auf der Leiterplatte 8 unmittelbar unter der Mitte des kleinen Kegelzahnrads 112 in und/oder an dem ein Permanentmagnet 114 befestigt ist, angeordnet ist. Ein Gegenkegelzahnrad 118 wird in der hier gezeigten vierten Ausgestaltung einer Magnetflusseinheit 116 mit einer alternativen Ausgestaltung eines Lagerelements 120 realisiert. Details aus Figur 16 sind in Figur 17 vergrößert dargestellt.

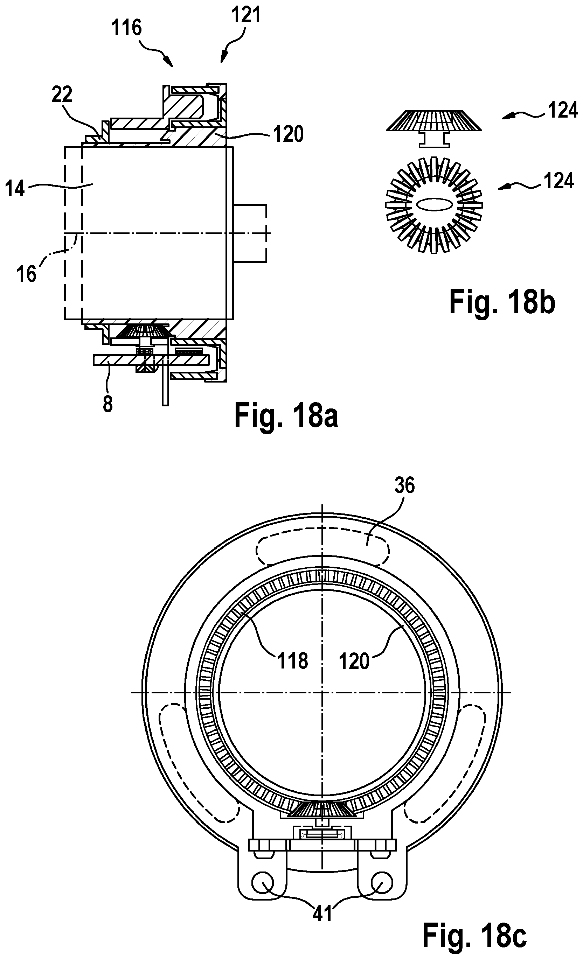

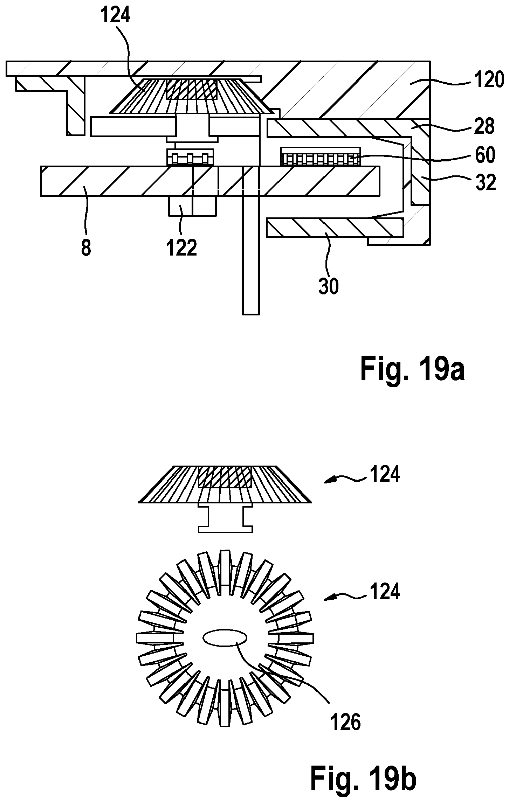

Eine alternative Lenkwinkelfunktion einer fünften Ausführungsform einer erfindungsgemäßen Sensoranordnung 121 ist in Figur 18 schematisch dargestellt. Hier ist ein Permanentmagnet auf der Leiterplatte 8 befestigt. Im und/oder am Kegelzahnrad 124 ist ein Metallplättchen 126 aus NiFe und somit aus demselben Material wie die magnetflussleitenden Ringe 28, 30 befestigt, das bei Drehung der Welle 14 das magnetische Feld des Permanentmagneten 122 beeinflusst. Details zu dieser Ausführungsform gehen aus Figur 19 hervor.

Das durch das Kegelzahnrad 112 und Gegenkegelzahnrad 118 bereitgestellte Kegelzahnradgetriebe kann in einer weiteren, hier nicht dargestellten Ausführungsform auch als Kronenradgetriebe mit einem Kronenzahnrad und einem Gegenkronenzahnrad ausgebildet sein.

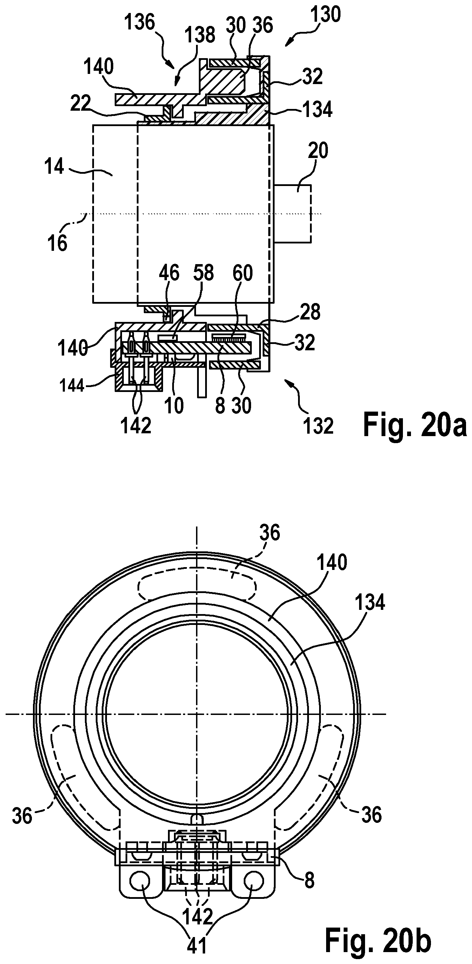

Eine fünfte Ausführungsform der erfindungsgemäßen Sensoranordnung 130 zum Bestimmen eines Drehmoments, das auf eine Welle 14 wirkt, ist in Figur 20a in Schnittansicht und in Figur 20b in Draufsicht schematisch dargestellt. Hierbei umfasst die Sensoranordnung 130 eine Magnetflusseinheit 132 mit einem an der Welle 14 befestigten Trageelement 134, das einen im Profil U-förmigen Doppelring 26 aufweist, in dem magnetflussleitende Ringe 28, 30 sowie an diesen Ringen 28, 30 angeordnete Finger 32 eingebettet sind. Außerdem ist auf dem Trageelement 134 ein Arretierungsring 22 angeordnet.

Die hier gezeigte Sensoranordnung 130 umfasst auch eine Ausgestaltung der Sensoreinheit 136 mit einer erweiterten Hülse 138, die ein erstes Gehäuseteil 140 zur Aufnahme einer Leiterplatte 8 mit magnetfeldsensitiven Sensoren, d. h. einem Hall-Schalter 58 und einem Hall-Schaltkreis 60, und einem Index-Magneten 10 umfasst. Auch an der erweiterten Hülse 138 sind drei Gleitschuhe 36 als Gleitelemente angeordnet. Weiterhin sind an der Leiterplatte 8 Einpresspins 142 angeordnet.

Die Leiterplatte 8 kann im Bereich der Sensoreinheit 136 außerhalb der Ringe 28, 30 durch einen Deckel 144 als zweites Gehäuseteil geschützt werden. Dazu ist die Sensoreinheit 136 so konstruiert, dass die Leiterplatte 8 in einem zu der Magnetflusseinheit 132 hin offenen Kästchen, das durch die erweiterte Hülse 138 begrenzt ist, liegt. Dabei weist der Deckel 144 gleichzeitig eine Steckerschnittstelle 146 auf. Somit wird ein Steckergehäuse konstruktiv durch den Deckel 144 bereitgestellt. Auf die Leiterplatte 8 werden die Einpresspins 142 per SPI-Prozess (SPI = single pin insertion) eingepresst, die gleichzeitig die Steckerkontakte darstellen. Beim Montieren des Deckels 144 werden dann diese Steckerkontakte durch entsprechende Öffnungen am Deckel 144 hindurchgesteckt. Somit ist die Leiterplatte 8 außerhalb der Ringe 28, 30 gut abgedeckt. Es wird kein SMD-Stecker für eine Printmontage der Leiterplatte 8 benötigt.

Die beschriebenen Ausführungsformen der Sensoranordnung 2, 80, 110, 121, 130 unterscheiden sich in der Regel durch Ausgestaltungen einzelner Komponenten derartiger Sensoranordnungen 2, 80, 110, 121, 130. Hierbei variieren üblicherweise Ausgestaltungen der Sensoreinheiten 4, 102, 136 der Magnetflusseinheit 6, 84, 100, 116, 132 sowie der Arretierungsringe 22, 82. Bezüglich der nicht weiter dargestellten dritten Ausführungsform der erfindungsgemäßen Sensoranordnung sind die Magnetflusseinheit 100 (Figur 14) und die Sensoreinheit 102 (Figur 15) in analoger Weise wie die Sensoreinheit 4 sowie die Magnetflusseinheit 6, 84 der beiden ersten Ausführungsformen der erfindungsgemäßen Sensoranordnung 2, 80 an der ersten Welle 14 anzuordnen. Allerdings ist es möglich, dass unterschiedliche Ausgestaltungen von Sensoreinheiten 4, 102, 136 von Magnetflusseinheiten 6, 84, 100, 116, 132 sowie von Arretierungsringen 22, 82 in beliebiger Weise untereinander kombiniert werden, so dass aus den genannten Komponenten weitere, hier nicht beschriebene, Ausführungsformen von Sensoranordnungen 2, 80, 110, 121, 130 bereitgestellt werden können.

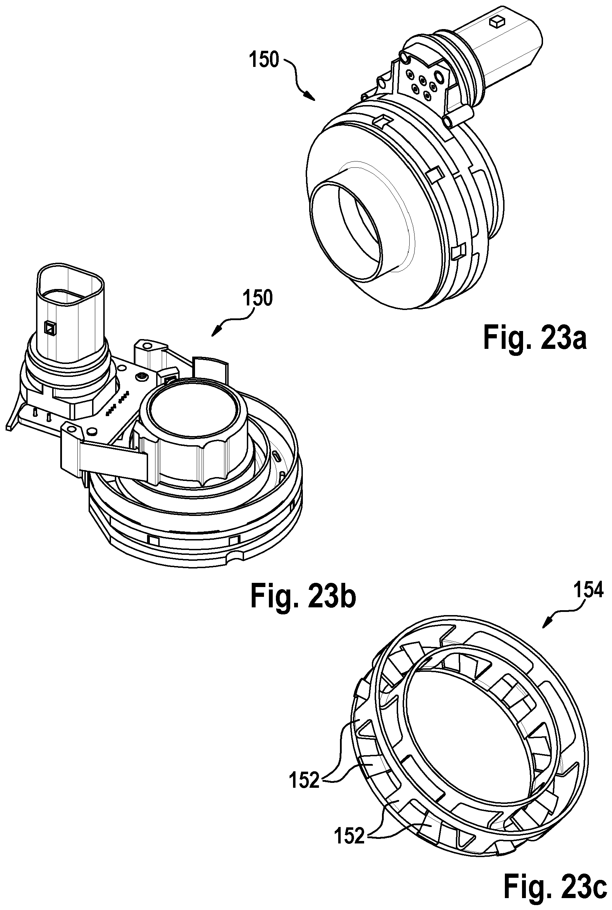

Figur 23 zeigt in schematischer Darstellung eine aus dem Stand der Technik bekannte Anordnung 150 zum Messen eines Drehmoments, die zwei Messringe 154 mit abgewinkelten Fingern 152 aus NiFe-Blech umfasst. Diese Anordnung 150 wird als magnetisch messender Drehmomentsensor TSS-1 der Robert Bosch GmbH bezeichnet.

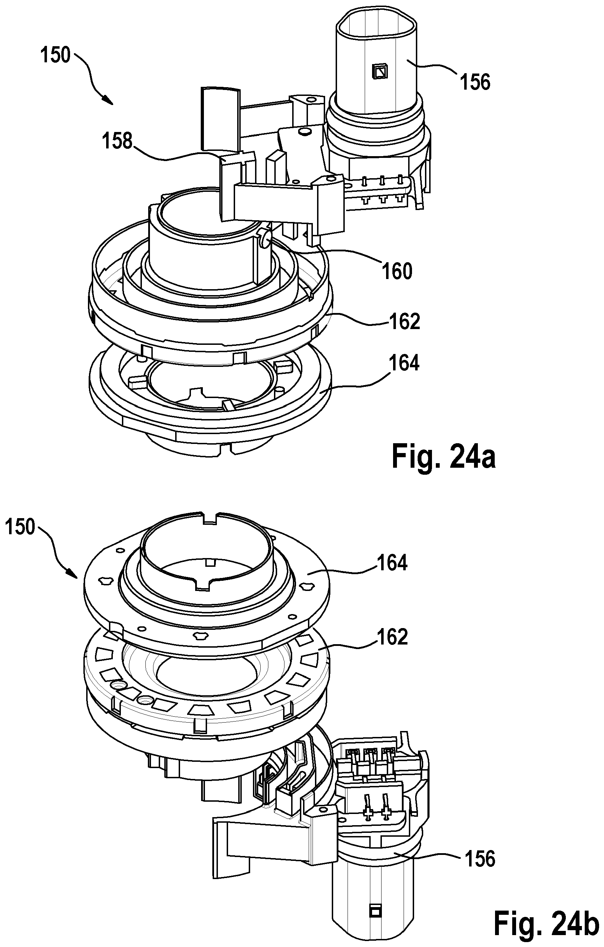

Figur 24 zeigt Details der Anordnung 150 aus Figur 23, nämlich eine Sensoreinheit 156, ein Index-Hallelement 158, einen Index-Magneten 160, eine sogenannte Flex-Tube-Unit 162, die die beiden Messringe 154 umfasst, und eine Magneteinheit 164.

Zur Herstellung dieser Anordnung 150 müssen u. a. Schöpflötverfahren oder Wellenlötverfahren eingesetzt werden, die in der Regel aufwendiger und teurer als ein Standard-Reflowprozess sind. Bei diesem Konzept ist eine zusätzliche Integration einer Lenkwinkelmessung nicht möglich.

## Patentansprüche

1. Sensoranordnung zum Erfassen eines Drehmoments, das auf eine Welle (14) wirkt, wobei die Sensoranordnung (2, 80, 110, 121, 130) eine Sensoreinheit (4, 102, 136) mit einer Hülse (34, 138), an der mindestens ein Gleitelement (36) und mindestens ein erster magnetfeldsensitiver Sensor angeordnet sind, und eine an der Welle (14) angeordnete Magnetflusseinheit (6, 84, 100, 116, 132) mit zwei magnetflussleitenden Ringen (28, 30) umfasst, wobei eine Magneteinheit (12) auf einer zweiten Welle (18), die sich koaxial zu der Welle (14) um eine gemeinsame Drehachse (16) drehen kann, angeordnet, wobei die beiden Wellen (14, 18) über einen Torsionsstab (20) miteinander verbunden sind, wobei die Sensoreinheit (4, 102, 136) und die Magnetflusseinheit (6, 84, 100, 116, 132) bei einer Drehung der Wellen (14, 18) relativ zueinander gedreht werden, und wobei der mindestens eine magnetfeldsensitive Sensor einen von den Ringen (28, 30) geleiteten Magnetflusserfasst, wobei mit dem mindestens einen magnetfeldsensitiven Sensor ein sich bei einer Drehbewegung änderndes Magnetfeld erkannt und in ein Signal, das von dem Drehmoment abhängig ist, umgewandelt wird,
**dadurch gekennzeichnet,**
**dass** das mindestens eine Gleitelement (36) aus Kunststoff zwischen den magnetflussleitenden Ringen (28, 30) angeordnet ist und mit definiertem Spiel radial zwischen den magnetflussleitenden Ringen (28, 30) gleitet.

2. Sensoranordnung nach Anspruch 1, bei der das mindestens eine Gleitelement (36) zwischen den magnetflussleitenden Ringen (28, 30) der Magnetflusseinheit (6, 84, 100, 116, 132) direkt, gleitend und/oder selbstführend gelagert ist.

3. Sensoranordnung nach Anspruch 1 oder 2, bei der der mindestens eine erste magnetfeldsensitive Sensor der Sensoreinheit (4, 102, 136) zwischen den magnetflussleitenden Ringen (28, 30) angeordnet ist.

4. Sensoranordnung nach einem der voranstehenden Ansprüche, bei dem die magnetflussleitenden Ringe (28, 30) an einem Lagerelement (24, 120) der Magnetflusseinheit (6, 84, 100, 116, 132) angeordnet sind, wobei mindestens einer der magnetflussleitenden Ringe (28, 30) zumindest teilweise mit Kunststoff umspritzt ist.

5. Sensoranordnung nach einem der voranstehenden Ansprüche, bei dem zwischen mindestens einer Komponente der Sensoreinheit (4, 102, 136) und mindestens einer weiteren Komponente der Sensoranordnung (2, 80, 110, 130), die sich zu der Sensoreinheit (4, 102, 136) drehen kann, in axialer und/oder radialer Richtung ein Lagerspiel (48, 50, 54, 56) vorgesehen ist

6. Sensoranordnung nach einem der voranstehenden Ansprüche, die einen Arretierungsring (22, 82) umfasst, der bei einer Drehung der Welle (14) relativ zu der Sensoreinheit (4, 102, 136) gedreht wird, wobei die Hülse (34, 138) der Sensoreinheit (4, 102, 136) zwischen dem Arretierungsring (22, 82) und einem der magnetflussleitenden Ringe (28, 30) der Magnetflusseinheit (6, 84, 100, 116, 132) angeordnet ist.

7. Sensoranordnung nach Anspruch 6, bei der der Arretierungsring (22, 82) ein Index-Element aufweist, mit dem über mindestens einen magnetfeldsensitiven Sensor der Sensoreinheit (4, 102, 136) Umläufe der Welle (14) zu zählen sind.

8. Sensoranordnung nach einem der voranstehenden Ansprüche, bei der an der Sensoreinheit (4, 102, 136) ein kleines Kegelzahnrad (112, 124) oder Kronenzahnrad und an der Magnetflusseinheit (6, 84, 100, 116, 132) ein Gegenkegelzahnrad (118) oder Gegenkronenzahnrad angeordnet ist, wobei Zähne des kleinen Kegelzahnrads (112, 124) oder des Kronenzahnrads und des Gegenkegelzahnrads (118) oder des Gegenkronenzahnrads ineinander greifen und sich bei einer Drehung der Welle (14) drehen, wobei über eine Drehung des kleinen Kegelzahnrads (112, 124) oder Kronenzahnrads ein Drehwinkel der Welle (14) zu ermitteln ist.

9. Sensoranordnung nach einem der voranstehenden Ansprüche, bei dem an der Sensoreinheit (4, 102, 136) mindestens eine Leiterplatte (8, 70) angeordnet ist, auf der der mindestens eine erste magnetfeldsensitive Sensor angeordnet ist.

10. Verfahren zum Erfassen eines Drehmoments, das auf eine Welle (14) wirkt, das mit einer Sensoranordnung (2, 80, 110, 121, 130) durchgeführt wird, die eine Sensoreinheit (4, 102, 136) mit einer Hülse (34, 138), an der mindestens ein Gleitelement (36) und mindestens ein erster magnetfeldsensitiver Sensor angeordnet sind, und eine an der Welle (14) angeordnete Magnetflusseinheit (6, 84, 100, 116, 132) mit zwei magnetflussleitenden Ringen (28, 30) umfasst, wobei eine Magneteinheit (12) an einer zweiten Welle (18), die sich koaxial zu der Welle (14) um eine gemeinsame Drehachse (16) drehen kann, angeordnet, wobei die beiden Wellen (14, 18) über einen Torsionsstab (20) miteinander verbunden sind, wobei die Sensoreinheit und die Magnetflusseinheit (6, 84, 100, 116, 132) bei einer Drehung der Wellen (14, 18) relativ zueinander gedreht werden, und wobei ein von den Ringen (28, 30) geleiteter Magnetfluss von dem mindestens einen magnetfeldsensitiven Sensor erfasst wird, wobei mit dem mindestens einen magnetfeldsensitiven Sensor ein sich bei einer Drehbewegung änderndes Magnetfeld erkannt und in ein Signal, das von dem Drehmoment abhängig ist, umgewandelt wird,
**dadurch gekennzeichnet,**
**dass** das mindestens eine Gleitelement (36) aus Kunststoff zwischen den magnetflussleitenden Ringen (28, 30) angeordnet ist und mit definiertem Spiel radial zwischen den magnetflussleitenden Ringen (28, 30) gleitet.

## Claims

1. Sensor arrangement for capturing a torque which acts on a shaft (14), wherein the sensor arrangement (2, 80, 110, 121, 130) comprises a sensor unit (4, 102, 136) with a sleeve (34, 138) on which at least one sliding element (36) and at least a first magnetic-field-sensitive sensor are arranged, and a magnetic flux unit (6, 84, 100, 116, 132), arranged on the shaft (14), with two magnetic-flux-conducting rings (28, 30), wherein a magnet unit (12) is arranged on a second shaft (18) which can rotate coaxially with respect to the shaft (14), about a common rotational axis (16), wherein the two shafts (14, 18) are connected to one another via a torsion rod (20), wherein the sensor unit (4, 102, 136) and the magnetic flux unit (6, 84, 100, 116, 132) are rotated relative to one another when the shafts (14, 18) rotate, and wherein the at least one magnetic-field-sensitive sensor captures a magnetic flux which is conducted by the rings (28, 30), wherein, with the at least one magnetic-field-sensitive sensor a magnetic field which changes during a rotational movement is detected and converted into a signal which is dependent on the torque,
**characterized**
**in that** the at least one sliding element (36) which is made of plastic is arranged between the magnetic-flux-conducting rings (28, 30) and slides radially with defined play between the magnetic-flux-conducting rings (28, 30).

2. Sensor arrangement according to Claim 1, in which the at least one sliding element (36) is mounted in a direct, sliding and/or self-guiding fashion between the magnetic-flux-conducting rings (28, 30) of the magnetic flux unit (6, 84, 100, 116, 132).

3. Sensor arrangement according to Claim 1 or 2, in which the at least one first magnetic-field-sensitive sensor of the sensor unit (4, 102, 136) is arranged between the magnetic-flux-conducting rings (28, 30).

4. Sensor arrangement according to one of the preceding claims, in which the magnetic-flux-conducting rings (28, 30) are arranged on a bearing element (24, 120) of the magnetic flux unit (6, 84, 100, 116, 132), wherein at least one of the magnetic-flux-conducting rings (28, 30) is at least partially encapsulated by injection molding with plastic.

5. Sensor arrangement according to one of the preceding claims, in which bearing play (48, 50, 54, 56) is provided in the axial and/or radial direction between at least one component of the sensor unit (4, 102, 136) and at least one further component of the sensor arrangement (2, 80, 110, 130) which can rotate with respect to the sensor unit (4, 102, 136).

6. Sensor arrangement according to one of the preceding claims, which sensor arrangement comprises a locking ring (22, 82) which is rotated relative to the sensor unit (4, 102, 136) when the shaft (14) rotates, wherein the sleeve (34, 138) of the sensor unit (4, 102, 136) is arranged between the locking ring (22, 82) and one of the magnetic-flux-conducting rings (28, 30) of the magnetic flux unit (6, 84, 100, 116, 132).

7. Sensor arrangement according to Claim 6, in which the locking ring (22, 82) has an index element with which revolutions of the shaft (14) can be counted by means of at least one magnetic-field-sensitive sensor of the sensor unit (4, 102, 136).

8. Sensor arrangement according to one of the preceding claims, in which a small bevel gear (112, 124) or crown gear is arranged on the sensor unit (4, 102, 136), and an opposing bevel gear (118) or opposing crown gear is arranged on the magnetic flux unit (6, 84, 100, 116, 132), wherein teeth of the small bevel gear (112, 124) or of the crown gear and of the opposing bevel gear (118) or of the opposing crown gear mesh with one another and rotate when the shaft (14) rotates, wherein a rotational angle of the shaft (14) can be determined by means of a rotation of the small bevel gear (112, 124) or crown gear.

9. Sensor arrangement according to one of the preceding claims, in which at least one printed circuit board (8, 70), on which the at least one first magnetic-field-sensitive sensor is arranged, is arranged on the sensor unit (4, 102, 136).

10. Method for capturing a torque which acts on a shaft (14), which method is carried out using a sensor arrangement (2, 80, 110, 121, 130) which comprises a sensor unit (4, 102, 136) with a sleeve (34, 138) on which at least one sliding element (36) and at least a first magnetic-field-sensitive sensor are arranged, and a magnetic flux unit (6, 84, 100, 116, 132), arranged on the shaft (14), with two magnetic-flux-conducting rings (28, 30), wherein a magnet unit (12) is arranged on a second shaft (18) which can rotate coaxially with respect to the shaft (14), about a common rotational axis (16), wherein the two shafts (14, 18) are connected to one another via a torsion rod (20), wherein the sensor unit and the magnetic flux unit (6, 84, 100, 116, 132) are rotated relative to one another when the shafts (14, 18) rotate, and wherein a magnetic flux which is conducted by the rings (28, 30) is captured by at least one magnetic-field-sensitive sensor, wherein, with the at least one magnetic-field-sensitive sensor a magnetic field which changes during a rotational movement is detected and converted into a signal which is dependent on the torque,
**characterized**
**in that** the at least one sliding element (36) which is made of plastic is arranged between the magnetic-flux-conducting rings (28, 30) and slides radially with defined play between the magnetic-flux-conducting rings (28, 30).

## Revendications

1. Système de capteurs pour détecter un couple qui agit sur un arbre (14),
dans lequel le système de capteurs (2, 80, 110, 121, 130) comprend une unité de capteurs (4, 102, 136) pourvue d'une enveloppe (34, 138) sur laquelle sont disposés au moins un élément coulissant (36) et au moins un premier capteur sensible au champ magnétique, et une unité pour flux magnétique (6, 84, 100, 116, 132) disposée sur l'axe (14), comportant deux anneaux conducteurs de flux magnétique (28, 30), dans lequel une unité magnétique (12) est disposée sur un second arbre (18) qui peut tourner coaxialement par rapport à l'arbre (14), autour d'un axe de rotation commun (16), dans lequel les deux arbres (14, 18) sont reliés l'un à l'autre par l'intermédiaire d'une barre de torsion (20), dans lequel l'unité de capteurs (4, 102, 136) et l'unité pour flux magnétique (6, 84, 100, 116, 132) sont mises en rotation l'une par rapport à l'autre lors d'une rotation des arbres (14, 18), et dans lequel l'au moins un capteur sensible au champ magnétique détecte un flux magnétique conduit par les anneaux (28, 30), dans lequel un champ magnétique variant lors d'un mouvement de rotation est détecté au moyen de l'au moins un capteur sensible au champ magnétique et est converti en un signal dépendant du couple,
**caractérisé en ce que** l'au moins un élément coulissant (36) en matière plastique est disposé entre les anneaux conducteurs de flux magnétique (28, 30) et coulisse radialement entre les anneaux conducteurs de flux magnétique (28, 30) avec un jeu défini.

2. Système de capteurs selon la revendication 1, dans lequel l'au moins un élément coulissant (36) est directement monté de manière coulissante et/ou autoguidée entre les anneaux conducteurs de flux magnétique (28, 30) de l'unité pour flux magnétique (6, 84, 100, 116, 132).

3. Système de capteurs selon la revendication 1 ou 2, dans lequel l'au moins un premier capteur sensible au champ magnétique de l'unité de capteurs (4, 102, 136) est disposé entre les anneaux conducteurs de flux magnétique (28, 30).

4. Système de capteurs selon l'une des revendications précédentes, dans lequel les anneaux conducteurs de flux magnétique (28, 30) sont disposés sur un élément formant palier (24, 120) de l'unité pour flux magnétique (6, 84, 100, 116, 132), dans lequel au moins l'un des anneaux conducteurs de flux magnétique (28, 30) est au moins partiellement encapsulé dans une matière plastique.

5. Système de capteurs selon l'une des revendications précédentes, dans lequel il est prévu entre au moins un composant de l'unité de capteurs (4, 102, 136) et au moins un autre composant du système de capteurs (2, 80, 110, 130), dans la direction axiale et/ou radiale, un jeu de palier (48, 50, 54, 56), qui peut tourner par rapport à l'unité de capteurs (4, 102, 136).

6. Système de capteurs selon l'une des revendications précédentes, comprenant un anneau de blocage (22, 82) qui peut être mis en rotation lors d'une rotation de l'arbre (14) par rapport à l'unité de capteurs (4, 102, 136), dans lequel l'enveloppe (34, 138) de l'unité de capteurs (4, 102, 136) est disposée entre l'anneau de blocage (22, 82) et l'un des anneaux conducteurs de flux magnétique (28, 30) de l'unité pour flux magnétique (6, 84, 100, 116, 132).

7. Système de capteurs selon la revendication 6, dans lequel l'anneau de blocage (22, 82) comporte un élément d'indexation qui permet de compter les tours de l'arbre (14) au moyen d'au moins un capteur sensible au champ magnétique de l'unité de capteurs (4, 102, 136).

8. Système de capteurs selon l'une des revendications précédentes, dans lequel une roue dentée conique (112, 124) ou couronne dentée de petite taille est disposée sur l'unité de capteurs (4, 102, 136) et une roue dentée conique correspondante (118) ou couronne dentée correspondante est disposée sur l'unité pour flux magnétique (6, 84, 100, 116, 132), dans lequel des dents de la roue dentée conique (112, 124) ou de la couronne dentée de petite taille ou de la roue dentée conique correspondante (118) ou de la couronne dentée correspondante sont en prise les une dans les autres et s'entraînent en rotation lors d'une rotation de l'arbre (14), dans lequel un angle de rotation de l'arbre (14) peut être déterminé par une rotation de la roue dentée conique (112, 124) ou de la couronne dentée de petite taille.

9. Système de capteurs selon l'une des revendications précédentes, dans lequel il est prévu sur l'unité de capteurs (4, 102, 136) au moins une carte de circuit imprimé (8, 70) sur laquelle est disposé l'au moins un premier capteur sensible au champ magnétique.

10. Procédé pour détecter un couple qui agit sur un arbre (14), mis en oeuvre au moyen d'un système de capteurs (2, 80, 110, 121, 130) comprenant une unité de capteurs (4, 102, 136) pourvue d'une enveloppe (34, 138) sur laquelle sont disposés au moins un élément coulissant (36) et au moins un premier capteur sensible au champ magnétique, et une unité pour flux magnétique (6, 84, 100, 116, 132) disposée sur l'arbre (14), comportant deux anneaux conducteurs de flux magnétique (28, 30), dans lequel une unité magnétique (12) est disposée sur un second arbre (18) qui peut tourner coaxialement par rapport à l'arbre (14), autour d'un axe de rotation commun (16), dans lequel les deux arbres (14, 18) sont reliés l'un à l'autre par l'intermédiaire d'une barre de torsion (20), dans lequel l'unité de capteurs et l'unité pour flux magnétique (6, 84, 100, 116, 132) sont mises en rotation l'une par rapport à l'autre lors d'une rotation des arbres (14, 18), et dans lequel un flux magnétique conduit par les anneaux (28, 30) est détecté par l'au moins un capteur sensible au champ magnétique, dans lequel un champ magnétique variant lors d'un mouvement de rotation est détecté au moyen de l'au moins un capteur sensible au champ magnétique et est converti en un signal dépendant du couple,
**caractérisé en ce que** l'au moins un élément coulissant (36) en matière plastique est disposé entre les anneaux conducteurs de flux magnétique (28, 30) et coulisse radialement entre les anneaux conducteurs de flux magnétique (28, 30) avec un jeu défini.
